# DEMANDE DE BREVET EUROPEEN

(11) **EP 3 223 400 A1**
(43) Date de publication de la demande: **27.09.2017**
(21) Numéro de dépôt: 17157638.2
(22) Date de dépôt: 23.02.2017
(51) Int. Cl.: H02K 5/15, H02K 5/20, H02K 5/22, H02K 5/26, H02K 9/06, H02K 11/04

(54) **MACHINE ELECTRIQUE TOURNANTE A TROIS PALIERS**

(30) Priorité: 23.03.2016 FR 1652474
(71) Demandeur: VALEO EQUIPEMENTS ELECTRIQUES MOTEUR, 94046 Créteil Cedex (FR)
(72) Inventeur: COLLIN, Xavier, 49000 ANGERS (FR); PHUNG, Michel, 92160 ANTONY (FR); OLCZAK, Damian, 43-344 Bielsko-Biala (PL)

(57) **Abrégé**

L'invention porte principalement sur une machine électrique tournante (10) comportant:
- un stator (16) ayant un corps (19) monté entre un palier avant (35) et un palier intermédiaire (36),
- ledit palier avant (35) et ledit palier intermédiaire (36) portant chacun un roulement pour le montage en rotation d'un arbre de rotor,
caractérisée en ce qu'elle comporte en outre:
- un palier arrière (37) monté en appui contre ledit palier intermédiaire,
- ledit palier avant (35) et ledit palier arrière (37) présentant chacun une zone externe (40, 41) contre laquelle est destinée à venir en appui une sangle de maintien (42).

## Description

La présente invention porte sur une machine électrique tournante à trois paliers. L'invention trouve une application particulièrement avantageuse, mais non exclusive, dans le domaine des alternateurs pour véhicules automobiles, poids lourds, tracteurs et véhicules spéciaux. Un tel alternateur transforme de l'énergie mécanique en énergie électrique et peut être réversible. Un tel alternateur réversible est appelé alterno-démarreur et permet de transformer de l'énergie électrique en énergie mécanique notamment pour démarrer le moteur thermique du véhicule. L'invention pourra également être mise en oeuvre avec un moteur de type électrique.

De façon connue en soi, un alternateur ou un alterno-démarreur comporte un carter et, à l'intérieur de celui-ci, un rotor à griffes, solidaire en rotation d'un arbre, et un stator qui entoure le rotor avec présence d'un entrefer. Le stator comporte un corps en forme d'un paquet de tôles doté d'encoches équipées d'isolant d'encoches pour le montage du bobinage du stator. En outre, le carter comporte un palier avant et un palier arrière portant chacun centralement un roulement à billes pour le montage à rotation de l'arbre du rotor. Classiquement, le corps du stator est monté serré, via sa culasse, entre le palier avant et le palier arrière au moyen de tirants assurant l'assemblage entre ces éléments.

Certains types d'alternateur sont prévus pour être maintenus contre un berceau fixé sur le châssis du véhicule. Le maintien de l'alternateur est assuré au moyen de sangles venant enserrer une périphérie externe des paliers de telle façon que l'alternateur est monté maintenu entre les sangles et le berceau.

Ce type de configuration présente toutefois des problèmes d'adaptation à l'écart entre les sangles susceptible de varier d'un modèle de véhicule à l'autre. En effet, si l'écart entre les sangles n'est pas adapté à la machine électrique tournante, cette dernière peut ne pas être correctement maintenue sur le véhicule automobile.

En outre, compte tenu du placage de la face externe d'un des paliers contre la face interne du berceau, l'évacuation du flux d'air chaud peut être rendue difficile suivant une portion circonférentielle de l'alternateur, ce qui peut engendrer des points chauds et donc une détérioration de l'électronique intégrée de la machine.

L'invention vise à remédier efficacement à au moins un de ces inconvénients en proposant une machine électrique tournante comportant:
- un stator ayant un corps monté entre un palier avant et un palier intermédiaire,
- ledit palier avant et ledit palier intermédiaire portant chacun un roulement pour le montage en rotation d'un arbre de rotor,
caractérisée en ce qu'elle comporte en outre:
- un palier arrière monté en appui contre ledit palier intermédiaire,
- ledit palier avant et ledit palier arrière présentant chacun une zone externe contre laquelle est destinée à venir en appui une sangle de maintien.

L'invention permet ainsi à la machine électrique de s'adapter aisément à la configuration du véhicule, en particulier en s'adaptant à l'écart entre les sangles de fixation du berceau par modification de la longueur du palier arrière. L'invention permet en outre de conserver une base générique commune intégrant les éléments actifs de la machine malgré la modification de longueur de cette dernière.

Selon une réalisation, ledit palier arrière est monté centré sur un rebord annulaire dudit palier intermédiaire. Cela permet de garantir une co-axialité entre les paliers avant et arrière en appui contre la face interne du berceau.

Selon une réalisation, ledit palier arrière comporte des encoches de ventilation suivant sa périphérie externe. Cela permet à l'air chaud sortant de la machine de s'évacuer suivant un passage d'air entre la face interne du berceau et face externe du palier arrière sans interférence entre le flux d'air entrant et le flux d'air sortant. On améliore ainsi de façon substantielle le refroidissement de la machine électrique.

Selon une réalisation, ladite machine électrique tournante comporte des moyens de ventilation aptes à générer un flux d'air pénétrant axialement dans ladite machine électrique tournante pour être refoulé radialement via des ouïes réalisées dans ledit palier intermédiaire puis circuler axialement suivant lesdites encoches de ventilation.

Selon une réalisation, ledit palier arrière comporte une pluralité de zones d'appui, les encoches de ventilation étant positionnées entre deux zones d'appui successives.

Selon une réalisation, ledit palier arrière comporte des renforts mécaniques en périphérie externe. Cela permet de rigidifier le palier arrière notamment dans les zones susceptibles d'entrer en résonnance lors de l'utilisation de la machine électrique.

Selon une réalisation, ledit palier arrière comporte des encoches de détrompage recevant des sorties de phase dudit stator. Cela permet de garantir un positionnement angulaire correct des sorties de phase pour effectuer leur interconnexion avec le pont redresseur.

Selon une réalisation, ledit palier arrière comporte des bossages de retenue en rotation dudit palier arrière par rapport audit palier intermédiaire. En outre, ces bossages ont également une fonction de guidage des tirants permettant la fixation des paliers entre eux.

Selon une réalisation, ledit palier arrière comporte un trou de passage d'un connecteur électrique.

Selon une réalisation, lesdits trois paliers sont assemblés les uns avec les autres au moyen de tirants d'assemblage.

Selon une réalisation, lesdits tirants d'assemblage traversent des alésages axiaux ménagés dans lesdits trois paliers, lesdits alésages ménagés dans au moins un des paliers étant taraudés pour la fixation desdits tirants d'assemblage par vissage.

Selon une réalisation, ledit palier arrière comporte des logements recevant chacun une tête d'un tirant d'assemblage.

Selon une réalisation, ladite machine électrique tournante comporte en outre un capot plat de fermeture muni d'ouvertures traversantes, ledit capot étant fixé sur ledit palier arrière.

Selon une réalisation, ladite machine électrique tournante comporte un pont redresseur monté sur ledit palier intermédiaire.

L'invention a également pour objet un ensemble caractérisé en ce qu'il comporte une machine électrique tournante telle que précédemment définie, et un berceau sur lequel ladite machine électrique tournante est maintenue par l'intermédiaire de sangles en appui sur lesdites zones externes correspondantes dudit palier avant et dudit palier arrière.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 montre une vue en perspective de la machine électrique tournante selon la présente invention montée sur un berceau;
La figure 3 est une vue en perspective détaillée de l'assemblage entre le palier arrière et le palier intermédiaire de la machine électrique tournante selon la présente invention;
La figure 4 est une vue en perspective illustrant le chemin des flux d'air entrant et sortant de la machine électrique tournante selon l'invention;
La figure 5 est une vue en perspective du palier avant de la machine électrique tournante selon la présente invention;
La figure 6 est une vue en perspective du palier intermédiaire de la machine électrique tournante selon la présente invention;
La figure 7 est une vue en perspective du palier arrière de la machine électrique tournante selon la présente invention.

Les éléments identiques, similaires, ou analogues conservent la même référence d'une figure à l'autre.

En outre, dans la description qui suit, on entend par face avant, la face d'un élément tournée vers la poulie 34 de l'alternateur et par face arrière la face tournée du côté opposé.

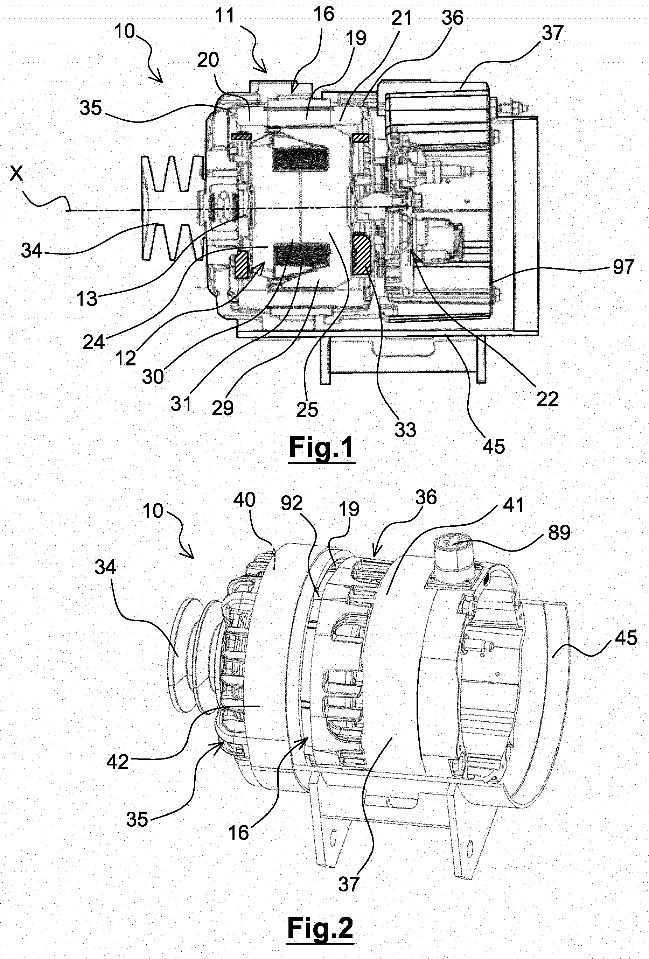

On a représenté sur la figure 1 une machine électrique 10 compacte et polyphasée, notamment pour véhicule automobile. Cette machine électrique pourra prendre la forme d'un alternateur 10 apte à transformer de l'énergie mécanique en énergie électrique qui pourra être réversible. Un tel alternateur réversible, appelé alterno-démarreur, permet de transformer de l'énergie électrique en énergie mécanique notamment pour démarrer le moteur thermique du véhicule.

Cet alternateur 10 comporte un carter 11 et, à l'intérieur de celui-ci, un rotor à griffes 12 monté sur un arbre 13, et un stator 16, qui entoure le rotor 12 avec présence d'un entrefer entre la périphérie externe du rotor 12 et la périphérie interne du stator 16. L'axe X suivant lequel s'étend l'arbre 13 forme l'axe de rotation du rotor 12.

Le stator 16 comporte un corps 19 en forme d'un paquet de tôles doté d'encoches équipées d'isolant d'encoches pour le montage des phases du stator 16. Chaque phase comporte au moins un enroulement traversant les encoches du corps 19 du stator 16 et forme, avec toutes les phases, un chignon avant 20 et un chignon arrière 21 de part et d'autre du corps 19 du stator 16.

Les enroulements sont obtenus par exemple à partir d'un fil continu recouvert d'émail ou à partir d'éléments conducteurs en forme de barre, tels que des épingles reliées électriquement entre elles par exemple par soudage. Ces enroulements sont par exemple des enroulements triphasés connectés en étoile ou en triangle, dont les sorties sont reliées à au moins un pont redresseur 22 comportant des éléments redresseurs tels que des diodes.

Le rotor 12 comporte deux roues polaires 24, 25 présentant chacune un flasque d'orientation transversale pourvu à sa périphérie externe de griffes 29 par exemple de forme trapézoïdale et d'orientation axiale. Les griffes 29 d'une roue 24, 25 sont dirigées axialement vers le flasque de l'autre roue. La griffes 29 d'une roue polaire 24, 25 pénètrent dans l'espace existant entre deux griffes 29 voisines de l'autre roue polaire, de sorte que les griffes 29 des roues polaires 24, 25 sont imbriquées les unes par rapport aux autres.

Un noyau cylindrique 30 est intercalé axialement entre les flasques des roues 24, 25. Ce noyau 30 porte à sa périphérie externe une bobine d'excitation 31 bobiné dans un isolant intercalé radialement entre le noyau 30 et la bobine 31.

Le rotor 12 porte des moyens de ventilation 33 constitués par exemple par des ventilateurs de type centrifuge comprenant des pales et fixés sur chacune de ses extrémités axiales.

L'arbre 13 pourra être emmanché à force dans l'alésage central des roues polaires 24, 25. Du côté de son extrémité avant, l'arbre 13 pourra comporter une partie filetée pour la fixation d'une poulie 34. La poulie 34 appartient à un dispositif de transmission de mouvements à au moins une courroie entre l'alternateur 10 et le moteur thermique du véhicule automobile.

Par ailleurs, le carter 11 comporte un palier avant 35, un palier intermédiaire 36, et un palier arrière 37. Le corps de stator 19 est monté entre le palier avant 35 et le palier intermédiaire 36. Le palier arrière 37 est monté en appui contre le palier intermédiaire 36.

Le palier avant 35 et le palier arrière 37 présentent chacun une zone externe 40, 41 contre laquelle est destinée à venir en appui une sangle de maintien 42. En effet, comme on peut le voir sur la figure 2, l'alternateur 10 est destiné à être monté maintenu entre deux sangles 42 et un berceau 45 fixé sur le châssis du véhicule. A cet effet, deux sangles 42 issues du berceau 45 viennent enserrer le palier avant 35 et le palier arrière 37 suivant leur zone d'appui externe 40, 41 respective. Afin de faciliter la compréhension de la figure, une seule sangle 42 a été représentée mais on prévoit bien entendu une deuxième sangle 42 destinée à venir en appui contre la zone externe 41 du palier arrière 37. Le berceau 45 s'étend par exemple circonférentiellement suivant 180 degrés environ. Cet angle pourra toutefois être adapté en fonction de l'application.

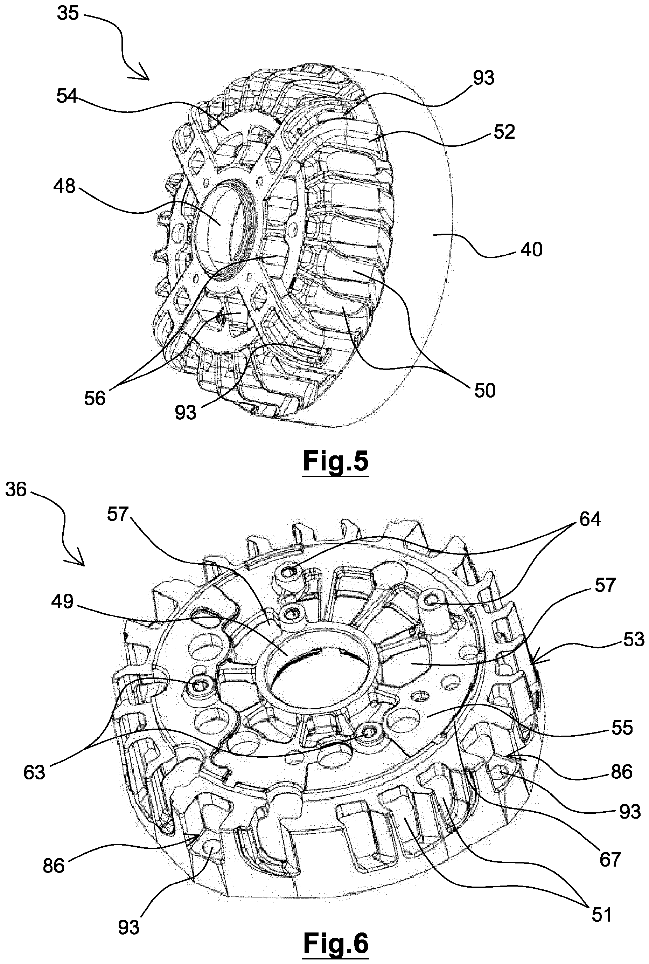

Plus précisément, comme cela est visible sur les figures 5 et 6, les paliers avant 35 et intermédiaire 36 sont de forme creuse et comportent chacun centralement une zone 48, 49 annulaire de réception d'un roulement à billes pour le montage à rotation de l'arbre 13. Les paliers avant 35 et intermédiaire 36 comportent également des ouïes 50, 51 ménagées dans leur paroi annulaire 52, 53 s'étendant axialement depuis une périphérie externe de la paroi transversale 54, 55 correspondante comportant la zone de réception des roulements 48, 49. Ces ouïes 50, 51 permettent d'autoriser une sortie de l'air chaud suivant une direction radiale. Les paliers 35 et 36 comportent également des ouvertures traversantes 56, 57 réalisées respectivement dans les parois transversales 54, 55 pour autoriser une entrée axiale du flux d'air dans la machine, comme cela est expliqué plus en détails ci-après.

Le palier intermédiaire 36 porte sur la face arrière le pont redresseur 22 ainsi qu'un porte-balais muni de balais destinés à venir frotter contre des bagues d'un collecteur pour assurer l'alimentation du bobinage du rotor 12. A cet effet, comme montré en figure 6, le palier intermédiaire 36 comporte des trous de fixation 63 destinés à recevoir des organes de fixation correspondants du pont redresseur 22, ainsi que des trous de fixation 64 destinés à recevoir des organes de fixation correspondants du porte-balais.

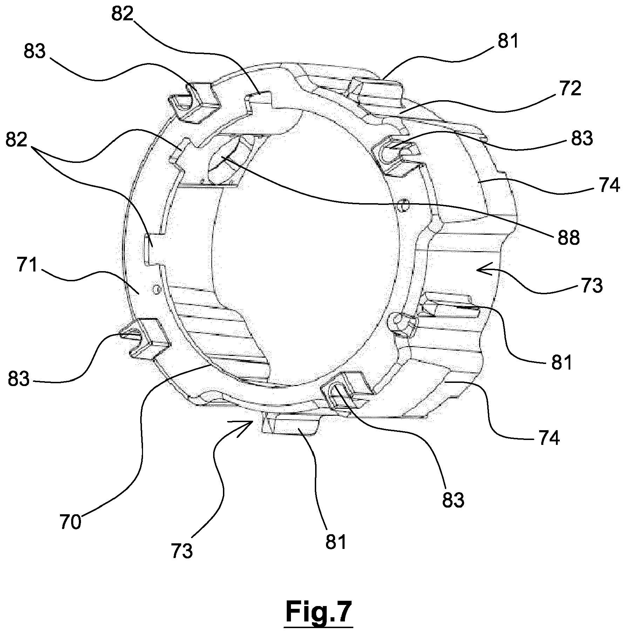

Afin de garantir une co-axialité entre le palier avant 35 et le palier arrière 37 en appui contre la face interne du berceau 45, le palier arrière 37 est monté centré sur un rebord annulaire 67 du palier intermédiaire 36 bien visible sur la figure 6. Ce rebord 67 s'étend en saillie depuis la face arrière de la paroi transversale 55. En outre, le palier arrière 37 comporte un alésage 70 ménagé dans une paroi 71 dirigée vers intérieur du palier 37 (cf. figure 7). La paroi d'extrémité 71 se situe dans le prolongement de la paroi latérale 72 ouverte axialement suivant ses deux extrémités.

Le palier arrière 37 comporte en outre des encoches de ventilation 73 s'étendant axialement suivant sa périphérie externe. Les encoches de ventilation 73 sont positionnées entre deux zones d'appui 74 successives qui sont saillantes par rapport aux encoches de ventilation 73. On a ainsi sur au moins une portion de la circonférence de la périphérie externe du palier arrière 37 une alternance entre des zones d'appui 74 contre le berceau 45 et des encoches de ventilation 73.

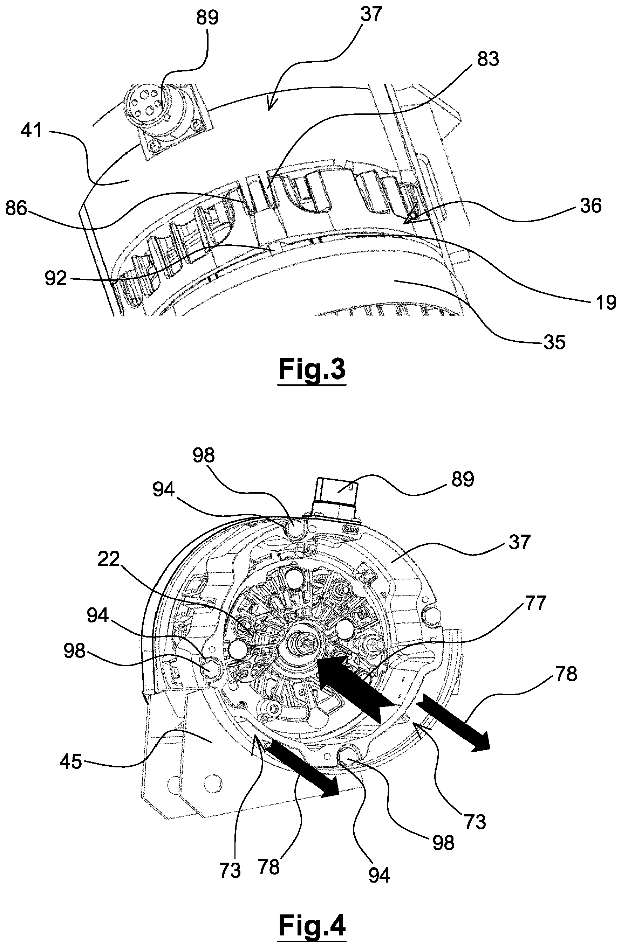

Ainsi, comme cela est illustré en figure 4, les ventilateurs 33 fixées sur le rotor 12 génèrent un flux d'air 77 pénétrant axialement dans la machine électrique de manière à traverser le pont redresseur 22 pour être ensuite refoulé radialement via les ouïes 51 réalisées dans le palier intermédiaire 36 puis circuler axialement suivant les encoches de ventilation 73. Cela permet au flux d'air sortant 78 de l'alternateur 10 de s'évacuer suivant un passage d'air entre la face interne du berceau 45 et face externe du palier arrière 37, sans interférence entre le flux d'air entrant 77 et le flux d'air sortant 78. On améliore ainsi de façon substantielle le refroidissement de la machine électrique.

Le palier arrière 37 pourra également comporter des renforts mécaniques 81 s'étendant axialement sur la périphérie externe de la paroi latérale 72. Ces renforts 81 s'étendent à l'intérieur des encoches de ventilation 73. Cela permet de rigidifier le palier arrière 37 notamment dans les zones susceptibles d'entrer en résonnance lors de l'utilisation de la machine électrique.

Des encoches de détrompage 82 ouvertes radialement vers l'intérieur du palier arrière 37 sont ménagées dans la paroi d'extrémité 71. Ces encoches 82 sont destinées à recevoir des sorties de phase du bobinage statorique. Cela permet de garantir un positionnement angulaire correct des sorties de phase pour effectuer leur interconnexion avec le pont redresseur.

En outre, des bossages 83 permettent d'assurer une retenue en rotation du palier arrière 37 par rapport au palier intermédiaire 36. A cet effet, les bossages 83 s'étendent en saillie axiale depuis la face avant de la paroi d'extrémité 71 du palier arrière 37. Comme on peut le voir clairement en figure 3, les bossages 83 présentent en l'occurrence une section en forme de U et sont destinées à s'insérer dans des logements 86 de forme complémentaire ménagés dans l'épaisseur de la paroi annulaire 53 du palier intermédiaire 36. Des alésages axiaux 93 sont réalisés dans le fond de ces logements 86 pour autoriser le passage des tirants d'assemblage 92.

Le palier arrière 37 comporte un trou de passage 88 d'un connecteur électrique 89 réalisé dans la paroi latérale 72. Ce connecteur 89 comporte des bornes de sortie reliées électriquement via des faisceaux électriques internes avec les balais du porte-balais et les sorties du pont redresseur 22. Ce connecteur 89 est destiné à être connecté avec un connecteur externe (non représenté) de forme complémentaire relié électriquement à un régulateur lequel est en relation avec la batterie du véhicule.

Les paliers 35, 36, 37 pourront par exemple être réalisés dans un matériau moulable tel que de l'aluminium ou en acier.

Afin d'assurer l'assemblage des trois paliers 35, 36, 37 entre eux, on utilise des tirants 92 traversant des alésages axiaux 93 ménagés dans les trois paliers 35, 36, 37. Les alésages 93 réalisés dans au moins un des paliers extrêmes (le palier avant 35 ou le palier arrière 37) sont taraudés pour la fixation des tirants 92 par vissage. En l'occurrence, les alésages 93 du palier avant 35 réalisés dans des zones renforcés de ce dernier sont taraudés pour permettre le vissage de l'extrémité libre filetée des tirants 92.

Le palier arrière 37 comporte des logements 94 recevant chacun une tête 98 d'un tirant 92. Cela permet d'éviter que les têtes 98 des tirants 92 interfèrent avec un capot plat 97 de fermeture fixé sur le palier arrière 37.

Ce capot 97 est muni d'ouvertures traversantes pour autoriser l'aspiration de l'air par les ventilateurs 33 suivant une direction axiale. Ce capot 97 pourra par exemple être constitué par une grille obtenue par découpage laser ou par découpage à jet haute pression.

La mise en oeuvre de l'invention a été décrite avec un alternateur. Elle pourra toutefois également être mise en oeuvre avec tout autre type de machine électrique (moteur électrique ou alterno-démarreur) comportant trois paliers assemblés entre eux et destinée à être montée sur un berceau.

Bien entendu, la description qui précède a été donnée à titre d'exemple uniquement et ne limite pas le domaine de l'invention dont on ne sortirait pas en remplaçant les éléments par tous autres équivalents.

## Revendications

1. Machine électrique tournante (10) comportant:
- un stator (16) ayant un corps (19) monté entre un palier avant (35) et un palier intermédiaire (36),
- ledit palier avant (35) et ledit palier intermédiaire (36) portant chacun un roulement pour le montage en rotation d'un arbre de rotor (13),
**caractérisée en ce qu'**elle comporte en outre:
- un palier arrière (37) monté en appui contre ledit palier intermédiaire (36),
- ledit palier avant (35) et ledit palier arrière (37) présentant chacun une zone externe (40, 41) contre laquelle est destinée à venir en appui une sangle de maintien (42).

2. Machine électrique tournante selon la revendication 1, **caractérisée en ce que** ledit palier arrière (37) est monté centré sur un rebord annulaire (67) dudit palier intermédiaire (36).

3. Machine électrique tournante selon la revendication 1 ou 2, **caractérisée en ce que** ledit palier arrière (37) comporte des encoches de ventilation (73) suivant sa périphérie externe.

4. Machine électrique tournante selon la revendication 3, **caractérisée en ce qu'**elle comporte des moyens de ventilation (33) aptes à générer un flux d'air pénétrant axialement dans ladite machine électrique tournante (10) pour être refoulé radialement via des ouïes (51) réalisées dans ledit palier intermédiaire (36) puis circuler axialement suivant lesdites encoches de ventilation (73).

5. Machine électrique tournante selon la revendication 3 ou 4, **caractérisée en ce que** ledit palier arrière (37) comporte une pluralité de zones d'appui, les encoches de ventilation (33) étant positionnées entre deux zones d'appui successives.

6. Machine électrique tournante selon l'une quelconque des revendications 1 à 5, **caractérisée en ce que** ledit palier arrière (37) comporte des renforts mécaniques (81) en périphérie externe.

7. Machine électrique tournante selon l'une quelconque des revendications 1 à 6, **caractérisée en ce que** ledit palier arrière (37) comporte des encoches de détrompage (82) recevant des sorties de phase dudit stator (16).

8. Machine électrique tournante selon l'une quelconque des revendications 1 à 7, **caractérisée en ce que** ledit palier arrière (37) comporte des bossages (83) de retenue en rotation dudit palier arrière (37) par rapport audit palier intermédiaire (36).

9. Machine électrique tournante selon l'une quelconque des revendications 1 à 8, **caractérisée en ce que** ledit palier arrière (37) comporte un trou de passage (88) d'un connecteur électrique (89).

10. Machine électrique tournante selon l'une quelconque des revendications 1 à 9, **caractérisée en ce que** lesdits trois paliers (35-37) sont assemblés les uns avec les autres au moyen de tirants d'assemblage (92).

11. Machine électrique tournante selon la revendication 10, **caractérisée en ce que** lesdits tirants d'assemblage (92) traversent des alésages axiaux (93) ménagés dans lesdits trois paliers (35-37), lesdits alésages (93) ménagés dans au moins un des paliers (35-37) étant taraudés pour la fixation desdits tirants d'assemblage (92) par vissage.

12. Machine électrique tournante selon la revendication 10 ou 11, **caractérisée en ce que** ledit palier arrière (37) comporte des logements (94) recevant chacun une tête (98) d'un tirant d'assemblage (92).

13. Machine électrique tournante selon l'une quelconque des revendications 1 à 12, **caractérisée en ce qu'**elle comporte en outre un capot (97) plat de fermeture muni d'ouvertures traversantes, ledit capot (97) étant fixé sur ledit palier arrière (37).

14. Machine électrique tournante selon l'une quelconque des revendications 1 à 13, **caractérisée en ce qu'**elle comporte un pont redresseur (22) monté sur ledit palier intermédiaire (36).

15. Ensemble **caractérisé en ce qu'**il comporte une machine électrique tournante (10) telle que définie selon l'une quelconque des revendications précédentes, et un berceau (45) sur lequel ladite machine électrique tournante (10) est maintenue par l'intermédiaire de sangles (42) en appui sur lesdites zones externes (40, 41) correspondantes dudit palier avant (35) et dudit palier arrière (37).
